(19) Europäisches Patentamt
European Patent Office
Office européen des brevets

(11) Publication number: **0 455 946 A2**

# (12) EUROPEAN PATENT APPLICATION

(21) Application number: **91102866.0**

(51) Int. Cl.[5]: **G06F 11/00**

(22) Date of filing: **27.02.91**

(30) Priority: **07.05.90 US 519719**

(43) Date of publication of application:
**13.11.91 Bulletin 91/46**

(84) Designated Contracting States:
**DE FR GB**

(71) Applicant: **International Business Machines Corporation**
**Old Orchard Road**
**Armonk, N.Y. 10504(US)**

(72) Inventor: **Harrison, Colin George**
**16 Cove Road**
**Brookfield, Connecticut 06804(US)**

(74) Representative: **Jost, Ottokarl, Dipl.-Ing.**
**IBM Deutschland GmbH Patentwesen und Urheberrecht Schönaicher Strasse 220**
**W-7030 Böblingen(DE)**

## (54) System for debugging shared memory multiprocessor computers.

(57) System for debugging application programs being executed in a parallel processor computer system. A debugging program running in one processor identifies data events occurring on a shared memory bus as significant breakpoints to identify data errors. A bus monitor is programmed to detect the data events as they occur in the shared memory bus. A trace memory is provided to record the detected data events along with a time stamp. The trace memory may be read and the program analyzed for the determination of data errors which may have occurred.

FIG. 2

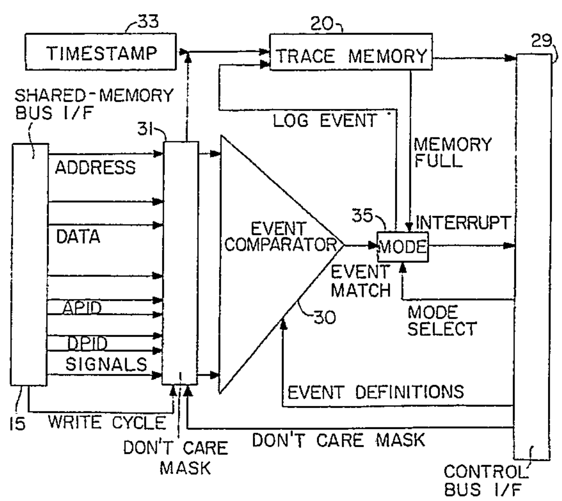


EP 0 455 946 A2

The present invention relates to the monitoring of data values produced during parallel processing of an application program. Specifically, a bus monitor is described which, under control of a debugging program, provides analysis of the execution of the application program.

The improvement in program execution by parallel processing is widely acknowledged, and parallel processing systems are proliferating. Programs for parallel processing systems like those for earlier single processing sequential execution machines are prone to having various kinds of errors. The analysis of such errors has traditionally been done on either a postmortem or preplanning basis. This analysis usually involves collecting a trace of the execution results which is later analyzed to determine the location of possible errors.

The postmortem analysis of large scale parallel programs is impractical because this technique produces an enormous volume of data which is difficult and expensive to analyze. Preplanning is also impractical because of the multiple concurrent schemes of instructions. The programmer cannot know where to search for the problem.

Debugging techniques for single processor machines are well-known and widely utilized which identify possible error regions within a program. The regions are supplemented with break points in the program to produce information about actions related to the current execution status of the program. These techniques have the disadvantage of requiring some foreknowledge of potential sources of data errors.

One particular type of program error which is especially difficult to identify is data error. In parallel processing, data is shared among parts of a program executing on several, possibly many processors, and it is difficult to identify which processor introduced an error into the shared data. An additional complication in debugging such data errors results from the relative speeds of execution of the several, possibly many, parts of the parallel program which influence the production of such errors. Consequently, any testing or debugging technique must not interfere with the normal execution speed of the parallel program.

## Summary of the Invention

It is an object of this invention to provide unobtrusive data debugging techniques to parallel processing systems.

It is a more specific object of this invention to provide monitoring of shared memory data of a parallel processing system to identify data errors which result while executing an application program.

These and other objects of the invention are obtained with a bus monitor which monitors the shared memory data bus for selected data which are produced during execution of an application program. One of the parallel processors is set to run a debugging program following a breakpoint event which is produced during running of the application program. The debugging program will identify to the monitor the shared data values which are to be trapped and stored, to be later analyzed for the determination of errors.

The debugging program does not execute while the parallel program is executing and thus does not impair the performance of the part running on this processor.

In a preferred embodiment of the invention, during an initialization phase, the debugging program will result in the downloading of the identity of selected shared memory data appearing on the shared memory bus, during execution of the parallel program, to the bus monitor which will be used to breakpoint the application. The identity of any processors which are to be interrupted as a consequence of a breakpoint trigger event detected by the monitor are also downloaded to the bus monitor. During execution of the application program, the monitored trigger events are time stamped and recorded in a trace memory in the bus monitor as they occur. The acquisition of these time stamped shared memory data occurs only during a WRITE operation to the shared memory to avoid ambiguities which would result from recording values being read from the shared memory.

The collected data may be recovered through a data interface to the bus monitor for analysis when the debugging program is restarted following breakpoint, or on the exit of the parallel program. In systems which map data values to memory locations using virtual memory mapping, provisions in the operating system are provided to restart the debugging program at an appropriate time to check the virtual memory map, and reconfigure the bus monitor to properly identify data which have been reassigned to a different address of the shared memory. The debugging routine may be invoked for each new memory mapping, permitting the bus monitor to be configured with the new physical address of this data event.

## Description of the Figures

Figure 1 illustrates a multiprocessor parallel operating system including a bus monitor for identifying data errors.

Figure 2 is a block diagram describing the bus monitor 12.

Figure 3 is an illustration of the debugger program sequence operating in processor 16.

Figure 4 illustrates the operation of the event comparator 30.

Figure 5 illustrates the application program sequence in each of the processors 16 through 23 when a page fault is encountered.

Figure 6 illustrates the processing steps executed by processor 16 when an interrupt is received from the bus monitor.

## Description of the Preferred Embodiment

Referring now to Figure 1, there is shown a multiprocessor parallel processing system for executing parallel programs. An input/output bus 29 is connected to each of the individual processors 16 through 23. The input/output traffic is regulated at each processor 16 through 23 with an appropriate controller and protocol device for allocating access to the input/output bus to each of the processors 16 through 23.

The processors 16 through 23 are also connected by a shared memory bus 15 to a shared memory 11. As is known in parallel processing systems, each of the processors 16 through 23 may require access to common data. Each processor 16 through 23 includes a memory controller which contends for access to the shared memory bus 15. Each of the processors 16 through 23 may therefore WRITE and READ to the shared memory 11 data values which are used by other processors in the parallel program execution. During a WRITE or READ operation by any one of the processors 16 through 23, the identity of the relevant processor is also placed on particular signal lines of the shared memory bus.

Data errors which result from parallel processing are difficult to analyze and debug, as has been noted. As each of the processors has the ability to access a shared memory data value and write or modify the shared memory data value, location of a precise point in a program which creates an error is exceedingly difficult.

In accordance with the invention, a bus monitor 12 is connected to the memory bus. The bus monitor 12 can monitor each of the shared data values written and read from the shared memory 11 by any one of processors 16 through 23, and also detects which of the processors 16 through 23 is performing the operation. The bus monitor 12 can be configured to identify and retain data appearing on the shared memory bus 15. Each of the detected events occurring on the shared memory bus 15 may be time stamped so that a postmortem analysis of the program execution in processors 16 through 23 may be effected. The retained data can later be recovered from the bus monitor 12 and analyzed when program errors are discovered. The bus monitor 12, in cooperation with one of the processors 16, may provide for a debugging of various portions of a program application running in the processors 16 through 23.

The bus monitor 12 may be advantageously interfaced with the operation of a debugging program in one of processors 16 through 23. The processor running the debugging program may be used to specify events which constitute particular addresses and values of data items and may be restricted to operations performed by any or all of the processors 16 through 23 to the monitor, which will be used to breakpoint the application running in processors 16 through 23. The bus monitor 12 is configured to identify which processors are to be interrupted and an interrupt level to be used. Other alternate configurations for the bus monitor 12, such as identifying the beginning of the recording of data sensed on the shared memory bus, and the ending of such recording, as well as events for resuming execution of an application which has triggered execution from the application to the debugger may be effected.

The application running in processors 16 through 23 will be halted during breakpoints which are detected by the bus monitor, and a symbolic debugging may be carried out by invoking the debugging program running in processor 16 on each of these executing processors 16 through 23. The debugging program running in processor 16 may be configured to provide a display of the particular event which initiated the breakpoint, and illustrate bus events which preceded the breakpoint under control of the debugging program. The triggered definitions of breakpoints stored in the bus monitor 12 may be modified as program breakpoints are encountered. Once a debugging operation has been completed on the processors 16 through 23, the application may resume execution by an operator-issued command from the processor 16.

Processor 16 also participates in the execution of the application program along with processors 17 through 23. The debugger program runs in processor 16 to initialize the monitor conditions, and is invoked when breakpoints are encountered. The debugging program may run when the application program is halted.

The bus monitor 12 is illustrated in the block diagram of Figure 2. A shared memory bus interface 15 is shown, which is capable of latching data occurring on all bus lines, on each of the bus cycles. In the embodiment shown in Figure 2, there is contemplated a bus architecture including a plurality of address lines for identifying the memory location in the shared memory, as well as data destined for or retrieved from the addressed memory locations. Also shown are data signals APID and DPID which, as an example of the protocol, correspond to a processor identity which is writing data to the shared memory, and the processor identity which is reading shared memory data. Additional signals are shown, including a valid cycle type signal. The valid cycle type indicates whether or not the shared memory is being addressed to write data, read data or respond. In the bus monitor of Figure 2, the valid cycle data is used to identify a WRITE cycle to which the bus monitor will respond. READ and RESPOND cycles are ignored by the bus monitor of Figure 2 for the purpose of event detection, but can be stored in the trace memory. This limitation is in recognition of the fact that identifying READ cycle data, by program execution, is more difficult and not in time synchronism with execution, as is the WRITE data function.

The shared memory bus interface 15 will latch each of the foregoing bus signals which may be upwards to 63 bits or more in a preferred embodiment of the invention. The shared memory bus 15 cycle time is in the range of 50 nanoseconds, requiring a like speed for the interface 15 to read and latch detected events.

The bus monitor of Figure 2 identifies certain data appearing on the shared memory bus, corresponding to an address, data, or both, which represents a breakpoint for the application program. An interface control bus 29 is shown, connected to the processor 16 receiving the identity of all breakpoint events which are sought during execution of a parallel program. Event definitions are downloaded from the debugging program in processor 16, via the control bus interface 29.

Additionally, commands to the processor 16 which runs the debugger program are transferred over the control bus interface 29. Besides loading the event definitions which are to be detected on the shared memory bus, a mode command is provided by the debugging program in processor 16. Certain events which are detected on the shared memory bus are logged in a trace memory 20 while others generate an interrupt for the processor 16 running the debugger program. The interrupts permit the debugging program to resume execution, once a breakpoint has been detected. The debugging program can then permit display of the breakpoint conditions which resulted in the interrupt, as well as display other data contained in the trace memory which related to the breakpoint which produced the interrupt.

The event comparator is preceded by a mask 31 which masks out the bits appearing on the shared memory bus which are not of interest. Therefore, the DPID signals or the address signals, or perhaps data signals in some instances, may be desirably masked from comparison, permitting a comparison of only that data which has been predetermined to be of interest on the shared memory bus 15.

The event comparator 30 may be a plurality of Content Addressable Memory (CAM) devices. In a preferred embodiment, four (4) 8K by 16 bit content addressable memories may be preprogrammed by control software with a shared memory bus data word of interest, and which is to be detected. During loading from the control bus interface 29, the CAMs are accessed as two banks of two, that is, as two 32-bit words. This permits a 64 bit wide comparator for upwards to 8,192 different events on the shared memory bus. Each CAM compares its portion of the shared memory bus data with the stored data definitions in approximately 45 nanoseconds. When a match is determined, the corresponding CAM will provide a 1 bit output, ANDed together with the other CAM outputs to produce an overall event detection.

Comparisons of the event definitions in the CAMs with bus data occur only on a WRITE cycle. As has previously been described, it is easier to relate a WRITE cycle to program execution during postmortem analysis than a READ cycle of the shared memory bus.

A time stamp 33 may be advantageously provided to indicate the time in which the event occurred on the shared memory bus. The event, as well as the time in which it occurred may be loaded in the trace memory 20 at an address indexed by a trace memory counter (not shown) associated with trace memory 20. Time stamp values are latched by the log event signal in the trace 22 memory along with the data associated with that time stamp, received from the mask 31. Approximately 128 bits may be used to identify the address of the shared memory data, the data value, the processor identifier and the time of occurrence with bits 0 through 47 representing the time stamp value units in 100 nanosecond increments.

The trace memory may be four banks of 30 to 40 nanosecond cycle time SRAMS which match the 50 nanosecond bus cycle time requirement. Each bank is 128 bits wide, being a SIMM of 8+1 bits wide. The trace memory can be considered to be 32 SIMM. The trace memory counter 20 may be programmed through the control bus interface 29 to permit recording of a sequence of shared memory bus operation which follows a 2detected event. The control bus interface 29 may identify a trace length for a trace length register associated with a trace memory 20. When in use, the trace length register may enable sampling of the shared memory bus data which follows a specific event detection. Other possibilities for recording shared memory bus data include the continuous recording of this data in trace memory 20 after a first event is detected until the memory is full, or until another preprogrammed event identifies the end of such recording.

The control bus interface 29 will also select interrupt generation for the processor 16. The control bus interface 29 can, under control of processor 16 running the debugging program, load and read the particular interrupt masks and interrupt levels needed to interrupt the processors 16 through 23. At the end of a test sequence, the trace memory 20 can also be addressed and its contents read out through commands received on control bus interface 29.

The bus monitor illustrated in Figures 1 and 2 is used in connection with software debugging techniques. In conventional debugging programs, breakpoints are set up by the user specifying an event action pair. For the parallel processsing system application, an event action pair might include t he detection of a specific value of a shared variable:

If WRITE(X) by any processor, then stop all processors.

This breakpoint is interpreted by the bus monitor as a command to generate an interrupt for halting all parallel processing whenever the bus monitor detects that data having a value of x is being written to a shared memory location for variable X. The execution of the application stops upon receipt of the generated interrupt, and the debugger program will identify to an operator, via an associated data display, the reason for the event. The line of code and the values of related variables are identified to the programmer so that program changes may be made to avoid the breakpoint in subsequent execution of the application. Once the program changes are made, the application may be restarted from the beginning until additional breakpoint events occur.

Other events which may constitute a breakpoint include the assignment of a data value to a specific variable by a specific processor:

If WRITE(X) any value by processor # then stop processor #.

This event, when detected, results in the interrupt of the specified processor. The debugging program may then take over displaying to the programmer the event, relevant lines of code in the application program, and related variables.

In the parallel processing mode, the debugging is aided by use of a trace memory in the bus monitor. The bus monitor can be used to trace the sequences accessed by each processor to a common variable stored in the shared memory. Breakpoints to permit tracing of such events can be as follows:

Clear trace memory

If WRITE(X) any value by any process, then start trace

If trace memory full, then stop all processors. This will permit the identity of every processor writing the value X in the shared memory to be identified by the bus monitor, and stored in memory with an appropriate time stamp. When the trace memory is full, all processors stop from a resulting interrupt, and the debugger program is invoked. The trace memory contents may then be read and analyzed to determine the sequence of execution by the processors in obtaining a value for the variable X.

Another set of event actions which may be useful in debugging include the following:

clear trace memory

If READ(X) by any processor and ! start trace; then stop processors.

If WRITE(X) by any processor, then start trace;

If trace memory full, then stop all processors.

This series of commands from the debugging processor will stop the processors in the event that a processor attempts to read a value for X before any value has been written to memory, representing an obvious error.

Referring to Figure 3, there is shown the sequence of events initiated by the debugging program executing in processor 16. In block 39, the system operator has initiated the debugging program execution. The debugging program will load the application program into processors 16 through 23 for execution in a parallel processing mode. In step 41, the debugging program will obtain the virtual address map in step 41 for each of the processors 16 through 23 which may use virtual addresses rather than actual physical addresses. With virtual memory addressing, the controller of each of the processors 16 through 23 will provide virtual addresses which need to be translated to physical addresses of the shared memory 11. Thus, in order to identify the breakpoints and bus monitor data, the virtual addresses for this data must be translated to the corresponding physical address by the program executing in processors 16 through 23.

From the virtual address map, it is possible to set breakpoint conditions in step 42, by identifying each physical address, data condition and/or APID/DPID condition which is of interest. These breakpoint conditions represent execution events produced by the program running in processor 1 through 23 which will initiate a debugging sequence. Once the bus monitor 12 is configured with the required event definitions for breakpoints, the bus monitor may be enabled in step 43 to begin monitoring conditions on the shared memory bus 15. The application is then executed in step 44.

Figure 4 illustrates the sequence of operations conducted by the bus monitor 12. The shared memory bus is continuously sampled in step 50 for each bus cycle of the shared memory bus. Decision block 51 determines whether or not a WRITE bus cycle has occurred. The DON'T CARE mask 52 will filter out any data conditions which are not involved in detecting the presence or absence of an event of interest. When a match is found between a detected event and the event defined in the event comparator 30, the event may either be logged into the trace memory in step 61 or an interrupt may be produced, depending on the quality and nature of the detected event. The mode control 35 will be preprogrammed to identify which of the signalled event matches are to be either logged or produce an interrupt. When an interrupt is issued, the interrupt is conveyed via the control bus interface 29 to the appropriate processors in step 62.

During execution of the application program, the operating system may need to move stored data from a previously identified memory location to a new location, as a result of a condition known as page fault, which is detected in step 68. Execution shifts to the debugger program which is executed in processor 16 in step 69. The virtual address map is again retrieved in step 70 to determine whether or not the page fault condition has resulted in a change of the physical address for data constituting an event to be detected. If the virtual address map has changed in step 71, then the bus monitor 72 is updated with new data reflecting the new physical address of data appearing on the shared memory bus which is to be monitored. The application may then be restarted at 73 with the bus monitor now configured to look for physical data constituting an event to be detected appearing on the shared memory bus.

Once the trace memory becomes full, the bus monitor may issue an interrupt in step 80. This will result in control again shifting from the program application running in processors 16 through 23 to the debugger program running in processor 16. The event logs may he retrieved in step 82 from the trace memory, and provided for the user in step 83 to do a postmortem analysis. Following the analysis, the debugger may be reloaded in step 84 and the bus monitor cleared to effect a new sequence of debugging and monitoring for the application program.

## Claims

1. A system for monitoring and debugging an application program running in a multiprocessor system having a shared memory connected to a plurality of processors comprising:

   a bus monitor connected to monitor a shared memory bus interconnecting said shared memory to processors of said multiprocessor system comprising:

   a programmable event detector for detecting the presence of pre-identified data events on said shared memory bus; and,

   a trace memory for storing each detected data event received on said shared memory bus; and,

   a debugging program loaded and executing in at least one of said processors intermittent with running of an application in said processors, producing at execution intervals of said application program marked by the occurrence of pre-identified data on said shared memory bus, debugging information identified by said monitor.

2. The system of claim 1 further comprising means for time stamping each detected event and storing said time with said detected pre-identified data in said trace memory.

3. The system of claim 1 further comprising input/output interface means for transferring data in said trace memory to a processor for analysis.

4. The system of claim 1 further comprising means for detecting when a write operation is being effected on said shared memory bus, and for enabling said programmable event detector only during a write operation.

5. The system of claim 1 further comprising an interrupt generator for generating an interrupt to said one processor when a data event is detected.

6. The system of claim 3 further comprising a mask interface positioned between said event detector and said shared bus to identify data bits which are to be detected from those which are to be ignored.

7. The system of claim 1 wherein said event detector comprises a plurality of content addressable memories having a data width which corresponds to said memory bus data width, said memories containing data at each memory location corresponding to said pre-identified data.

8. The system of claim 1 wherein said programmable event detector enables said trace memory to identify a plurality of sequential events following a first trigger event.

9. The system of claim 8 wherein said programmable event detector disables said trace memory in response to a second trigger event produced from said programmable event detector.

10. The system of claim 1 further comprising an interrupt generator connected to interrupt said processor which executes said debugging program in response to a first specified detected data event, transferring control of an application running in said processors to said processor executing said debugging program.

11. The system of claim 1 wherein said interrupt generator initiates an interrupt following detection of a second specified event by said event detector.

12. The system of claim 1 wherein said application specifies breakpoints identifying said pre-identified data as a virtual memory address, and said detector converts virtual addresses related to said breakpoints to physical addresses of said shared memory, and loads said related physical addresses to a bus monitor event detector.

13. The system of claim 12 wherein said application invokes said debugger program when data is reassigned from one memory location of said shared memory to another location of said shared memory, and said monitor is issued a subsequent related physical address of said new location.

FIG. 1

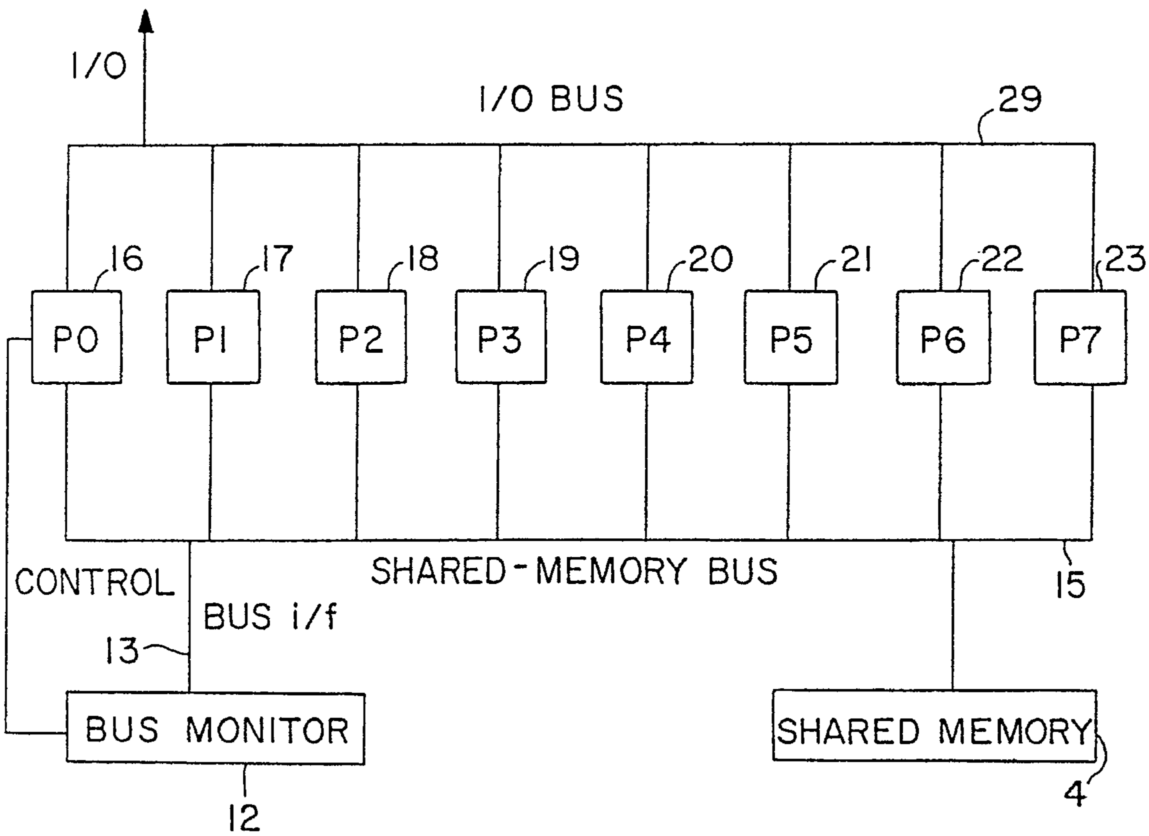
I/O
I/O BUS
29
16
17
18
19
20
21
22
23
P0
P1
P2
P3
P4
P5
P6
P7
CONTROL
SHARED-MEMORY BUS
15
BUS i/f
13
BUS MONITOR
SHARED MEMORY
12
4

FIG. 2

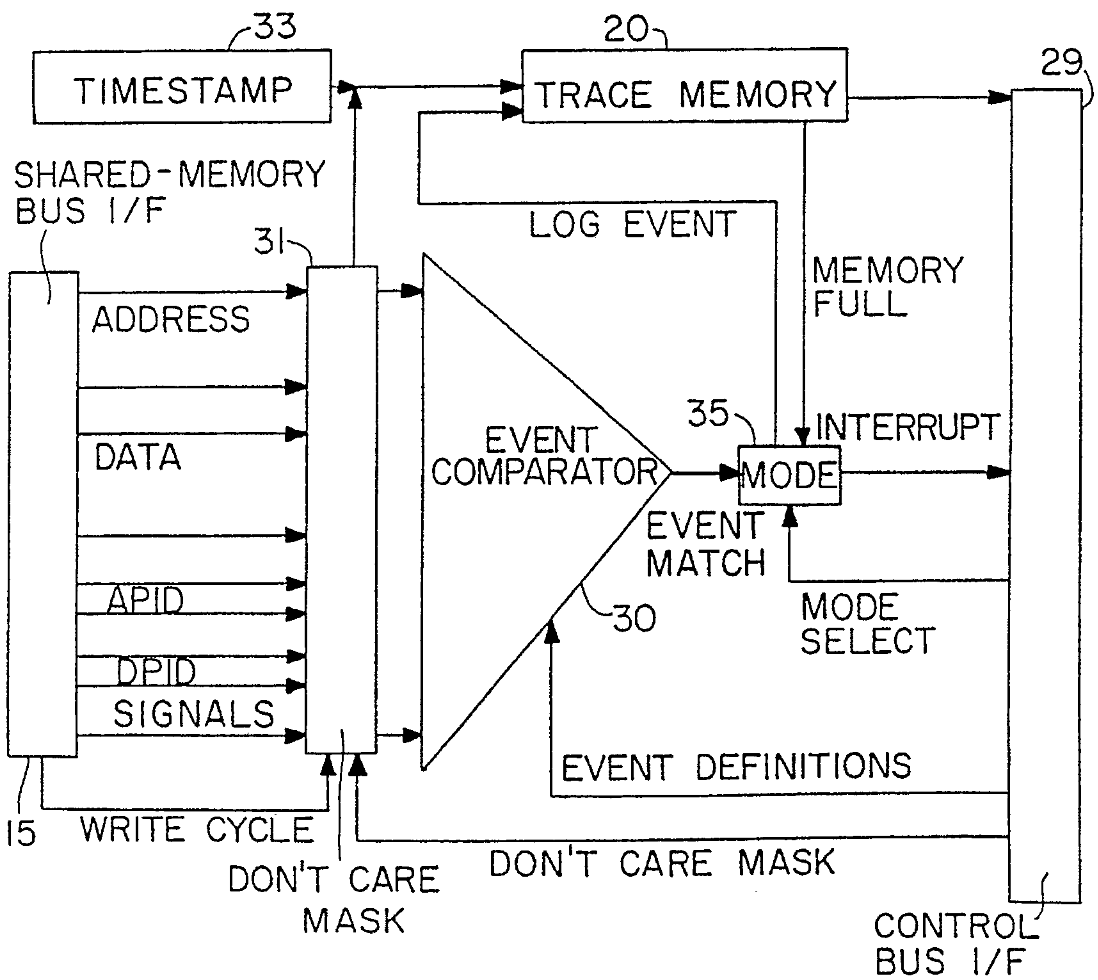
33
TIMESTAMP
20
TRACE MEMORY
29
SHARED-MEMORY
BUS I/F
31
LOG EVENT
MEMORY
FULL
ADDRESS
35
INTERRUPT
EVENT
COMPARATOR
MODE
DATA
EVENT
MATCH
APID
30
MODE
SELECT
DPID
SIGNALS
EVENT DEFINITIONS
15
WRITE CYCLE
DON'T CARE MASK
DON'T CARE
MASK
CONTROL
BUS I/F

FIG. 3

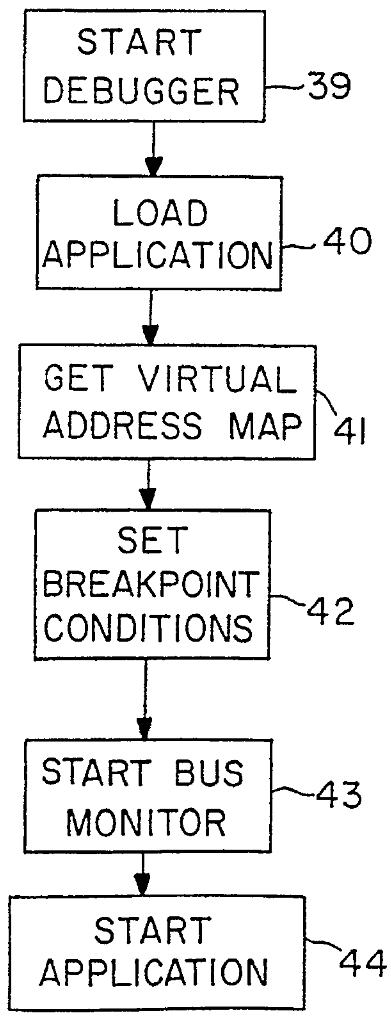
START
DEBUGGER
39
LOAD
APPLICATION
40
GET VIRTUAL
ADDRESS MAP
41
SET
BREAKPOINT
CONDITIONS
42
START BUS
MONITOR
43
START
APPLICATION
44

FIG. 4

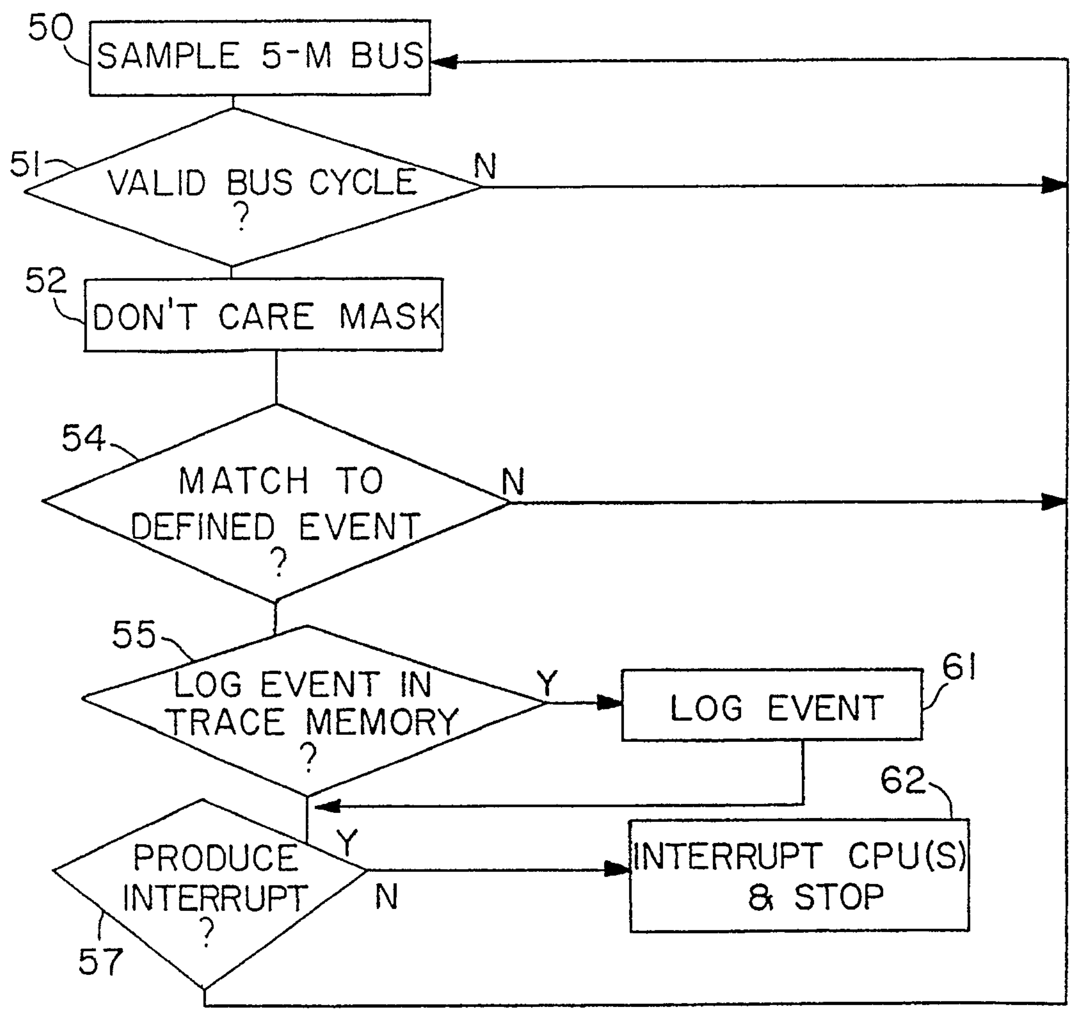
50
SAMPLE 5-M BUS
51
VALID BUS CYCLE ?
N
52
DON'T CARE MASK
54
MATCH TO DEFINED EVENT ?
N
55
LOG EVENT IN TRACE MEMORY ?
Y
LOG EVENT
61
62
PRODUCE INTERRUPT ?
Y
N
INTERRUPT CPU(S) & STOP
57

FIG. 5

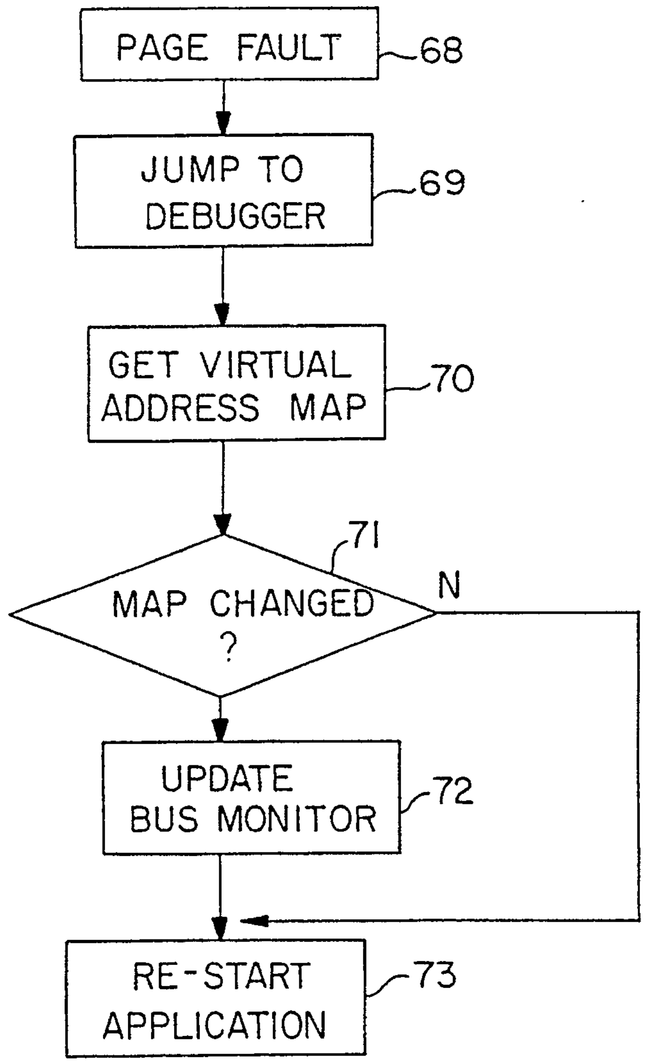
PAGE FAULT
68
JUMP TO DEBUGGER
69
GET VIRTUAL ADDRESS MAP
70
71
MAP CHANGED ?
N
UPDATE BUS MONITOR
72
RE-START APPLICATION
73

FIG. 6

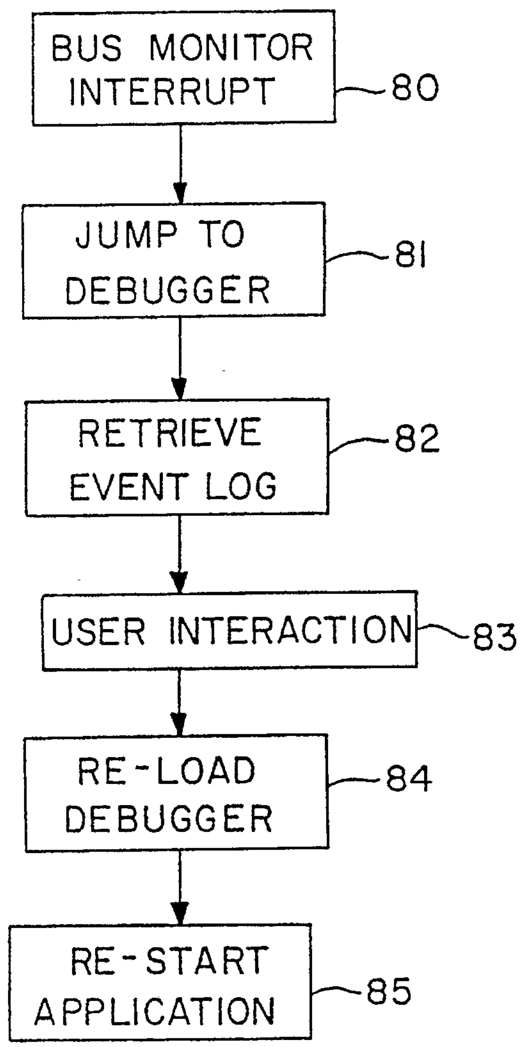
BUS MONITOR INTERRUPT
80
JUMP TO DEBUGGER
81
RETRIEVE EVENT LOG
82
USER INTERACTION
83
RE-LOAD DEBUGGER
84
RE-START APPLICATION
85